## Europäisches Patentamt
## European Patent Office
## Office européen des brevets

(19)

(11) Veröffentlichungsnummer: **0 037 088**
**B1**

(12)

# EUROPÄISCHE PATENTSCHRIFT

(45) Veröffentlichungstag der Patentschrift:
**23.11.83**

(21) Anmeldenummer: **81102296.1**

(22) Anmeldetag: **26.03.81**

(51) Int. Cl.³: **H 02 P 13/18,** H 02 M 1/06,
B 60 L 9/22, H 02 H 7/122

(54) **Verfahren zum Notbetrieb einer Asynchronmaschine mit Wechselrichter und Gleichstromsteller bei niedriger Speisespannung.**

(30) Priorität: **02.04.80 DE 3012974**

(43) Veröffentlichungstag der Anmeldung:
**07.10.81 Patentblatt 81/40**

(45) Bekanntmachung des Hinweises auf die Patenterteilung:
**23.11.83 Patentblatt 83/47**

(84) Benannte Vertragsstaaten:
**AT CH DE LI NL**

(56) Entgegenhaltungen:
DE - A - 2 637 388
US - E - 27 193

**TECHNISCHE MITTEILUNGEN AEG-TELEFUNKEN**
Band 62, Nr. 6, 1972 G. BEINHOLD et al.
*"Kommutierungsschaltung mit verlustarmer
Nachladung für selbstgeführte Stromrichter"* Seiten 232
bis 237
SIEMENS-ZEITSCHRIFT, Band 50, Nr. 7, 1976, Erlangen
W. WAIDMANN *"Drehstromantrieb für
Gleichstrombahnen"* Seiten 493 bis 497

(73) Patentinhaber: **SIEMENS AKTIENGESELLSCHAFT,
Berlin und München Wittelsbacherplatz 2,
D-8000 München 2 (DE)**

(72) Erfinder: **Urbanke, Christian, Dr.,
Gerhart-Hauptmann-Strasse 11, D-8520 Erlangen (DE)**

## Verfahren zum Notbetrieb einer Asynchronmaschine mit Wechselrichter und Gleichstromsteller bei niedriger Speisespannung

Die Erfindung betrifft ein Verfahren zum Betrieb einer Asynchronmaschine mit einem Wechselrichter mit Phasenfolgelöschung, der bei Normalbetrieb mittels eines an eine Gleichstromquelle angeschlossenen Gleichstromstellers mit einem steuerbaren Gleichstrom gespeist ist.

Bei einer derartigen Anlage ist es erforderlich, dass der jeweils durch das Gleichstromstellerventil bzw. das Wechselrichterventil des gerade gezündeten Wechselrichterzweiges fliessende Strom abgeschaltet wird. Hierzu müssen der Löschkondensator des Stellers und die Kommutierungskondensatoren des Wechselrichters eine ausreichende Spannung besitzen, auf die sie sich im Normalbetrieb von selbst aufladen.

Beim Anfahren der Maschine sind die Kommutierungskondensatoren jedoch im allgemeinen ungeladen, weshalb in der Regel eine eigene Nachladeeinrichtung vorgesehen ist, die die erforderliche Kommutierungsspannung liefert. Für den Fall, dass auf eine Nachladeeinrichtung im Starkstromteil des Wechselrichters verzichtet werden soll, ist in der EP-A2 Nr. 31118, deren Inhalt als Stand der Technik gemäss Art. 54 (3) EPÜ gilt, vorgesehen, den Eingangsgleichstrom des Wechselrichters über die Gleichstromstellersteuerung zunächst auf kleine Werte zu begrenzen und die Taktfrequenz auf die Wechselrichtermaximalfrequenz zu erhöhen. Entsprechend dem Verhältnis von Eingangsglättungsdrossel und Maschineninduktivität wird der Kommutierungskondensator auf eine Anfangsspannung aufgeladen, die zur Kommutierung des begrenzten Anfangsstromes ausreicht. Sobald die Spannung am Kommutierungskondensator eine ausreichende Höhe erreicht hat, kann der Eingangsgleichstrom z.B. zeitverzögert erhöht und anschliessend die Taktfrequenz auf die optimale Anfahrfrequenz reduziert werden. Voraussetzung dieses Verfahrens ist allerdings, dass das Stellerventil zur Begrenzung des Gleichstromes stets steuerbar (löschbar) ist. Dies ist aber nur der Fall, wenn die Gleichstromquelle zur Speisung des Stellers auf einer ausreichend hohen Betriebsspannung liegt.

Derartige Asynchronmaschinen können für den Antrieb von Fahrzeugen verwendet werden. In den Wartungsanlagen für derartige Fahrzeuge, insbesondere in Waschstrassen und Reparaturstrecken, stehen jedoch aus Gründen der Sicherheit für die Speisung des Fahrzeuges nur Fahrdrähte mit weniger als 60 V Drahtspannung zur Verfügung. Bei derart niedrigen Betriebsspannungen ist der Steller nicht mehr löschbar oder er muss mit unvertretbarem Aufwand überdimensioniert werden. Der den Wechselrichter speisende Eingangsstrom ist also nicht mehr steuerbar. Bei gezündetem Stellerventil steigt dann der Zwischenkreisstrom für den Fall, dass die Asynchromaschine nur mit einer der erforderlichen niedrigen Fahrgeschwindigkeit entsprechenden niedrigen Drehzahl betrieben wird, unkontrollierbar an, so dass der Wechselrichter den Strom nicht mehr ordnungsgemäss kommutieren kann.

Der Erfindung liegt die Aufgabe zugrunde, bei einer Asynchronmaschine der eingangs genannten Art bei derart niedrigen Spannungen einen Betrieb der Asynchronmaschine (Notbetrieb) mit niedriger Drehzahl zu ermöglichen, z.B. zur langsamen Fahrt durch eine Waschstrasse. Gemäss der Erfindung wird diese Aufgabe durch die im Anspruch 1 genannten Verfahrensschritte gelöst.

Demgemäss muss zu Beginn des Notbetriebes das Gleichstromstellerventil gesperrt sein. Fährt z.B. ein mit einer derartigen Asynchronmaschine ausgerüstetes Fahrzeug zunächst mit hoher Fahrdrahtspannung in eine Waschstrasse, in der nur noch eine niedrige Drahtspannung zur Verfügung steht, so muss gesichert sein, dass das Gleichstromstellerventil nach Abtrennung von der hohen Fahrdrahtspannung erloschen ist. Die Stromzufuhr zum Wechselrichter ist also unterbrochen, die Maschine kommt zum Stillstand. Währenddessen werden die Kommutierungskondensatoren des Wechselrichters auf eine vorgegebene Spannung vorgeladen (Verfahrensschritt a).

Sodann wird das Gleichstromstellerventil gezündet und alle Löschimpulse für dieses Gleichstromstellerventil werden bis zur Beendigung des Notbetriebes gesperrt (Verfahrensschritt b). Praktisch gleichzeitig werden zwei nicht zum gleichen Strang des Wechselrichters gehörende Wechselrichter-Brückenzweige gezündet, so dass nun ein Gleichstrom über den Gleichstromsteller, den einen gezündeten Brückenzweig, eine Ständerwicklung der Asynchronmaschine und den anderen gezündeten Brückenzweig fliesst (Verfahrensschritt c).

Dieser Strom steigt an und überschreitet bald einen Mindestwert, der bei Zündung des Wechselrichters ausreichen würde, um die Kommutierungskondensatoren über die Vorladespannung hinaus nachzuladen. Noch bevor der Strom einen Höchstwert überschreitet, bei dem die Spannung der anfangs vorgeladenen Kommutierungskondensatoren gerade noch für die Kommutierung des Stromes von einem Brückenzweig auf einen anderen ausreicht, wird im Verfahrensschritt d der Wechselrichter mit einer hohen Taktfrequenz angesteuert. Diese Taktfrequenz ist mindestens so hoch gewählt, dass der innerhalb des ersten Ansteuerungstaktes fliessende Strom den erwähnten Höchstwert, bei dem die Vorladung der Kondensatoren gerade noch zur Kommutierung ausreicht, nicht überschreitet. Mit den ersten Kommutierungen werden aber die Kommutierungskondensatoren auf eine wesentlich höhere Spannung aufgeladen, als zur Vorladung erforderlich ist und gleichzeitig ist der Anstieg des Stromes durch den Kommutierungsinnenwiderstand des Wechselrichters und die induktive Last der Asynchronmaschine begrenzt. Daher kann im Verfahrensschritt e die Ansteuerfrequenz gefahrlos abgesenkt werden. Da der Läufer der Asynchronmaschine der hohen Ansteuerfrequenz nicht folgen kann, bleibt die Asynchronmaschine zunächst stehen, bis die Taktfrequenz einen so niedrigen Wert erreicht hat, dass die Asynchronmaschine anlaufen kann.

Nun kann im Verfahrensschritt f die Taktfrequenz entsprechend der angestrebten Drehzahl der Asynchronmaschine langsam gesteigert werden, wodurch das Fahrzeug mit einer entsprechend langsamen Geschwindigkeit angetrieben wird. Vorteilhaft wird dabei ein Grenzwert für die Drehzahl der Asynchronmaschine und somit für das Hochfahren der Taktfrequenz nach dem Anlauf vorgegeben. Dieser Grenzwert ist so gewählt, dass keine Selbstentregung der Asynchronmaschine austritt. Das Fahrzeug kann dann, wie gewünscht wird, mit einer langsamen Geschwindigkeit durch die Waschstrasse oder durch die Reparaturstrecke fahren. Sind zum Antrieb des Fahrzeuges mehrere Asynchronmaschinen vorgesehen, so ist es vorteilhaft, den hier beschriebenen Notbetrieb nur mit einer Asynchromaschine vorzunehmen, während die anderen Asynchronmaschinen bei dem langsamen Durchfahren der Waschstrasse ausgeschaltet bleiben.

Durch Absenken der Taktfrequenz auf einen Wert, der der Schlupffrequenz der Asynchronmaschine bei Stillstand entspricht, kann das Fahrzeug zwar angehalten werden. Jedoch kann der durch den Wechselrichter fliessende Strom nicht abgeschaltet werden, da bei der niedrigen Fahrdrahtspannung nach wie vor der Steller nicht löschbar ist. Zur Beendigung des Notbetriebes (Verfahrensschritt g) wird daher die Gleichstromquelle über ein entsprechendes Schütz abgeschaltet.

Anhand zweier Figuren und eines bevorzugten Ausführungsbeispieles wird die Erfindung näher erläutert.

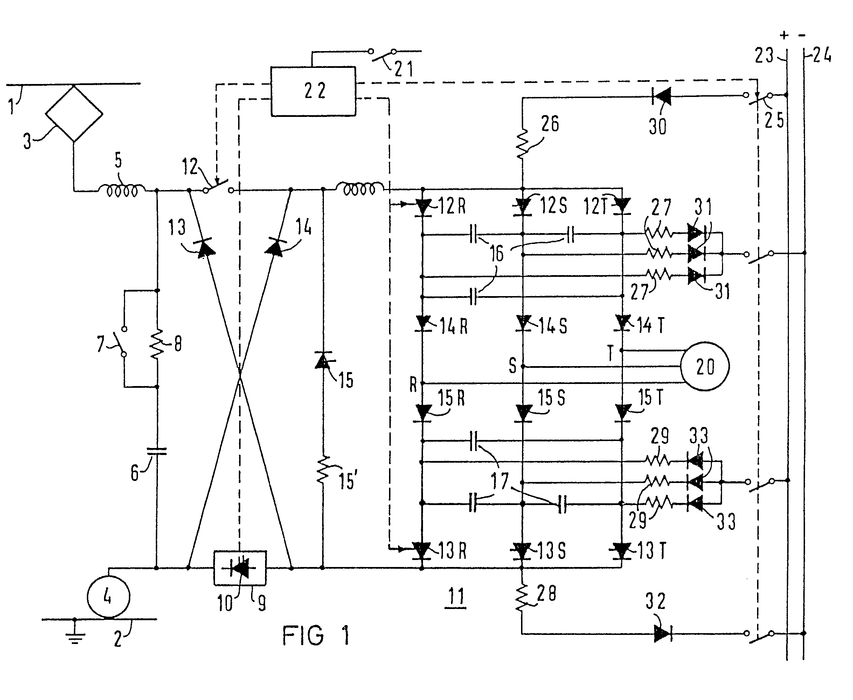

Fig. 1 zeigt einen Drehstromantrieb für eine Gleichstrombahn, der z.B. entsprechend der „Siemens-Zeitschrift" 50 (1976), S. 493 bis 495, aufgebaut ist. Der Fahrdraht 1 und die Schiene 2 stellen die Pole der über einen Stromabnehmer 3 und die Fahrzeugräder 4 mit dem Antrieb verbundenen Gleichstromquelle dar. Der Gleichstromquelle ist mit der Eingangsglättungsdrossel 5 und dem Eingangsfilterkondensator 6, zu dessen Vorladung ein über den Ladeschütz 7 kurzschliessbarer Ladewiderstand 8 vorgesehen ist, ein Eingangsfilter nachgeschaltet. An die Gleichstromquelle ist der Gleichstromsteller 9, dessen zwangslöschbares Hauptventil 10 symbolisch dargestellt ist, angeschlossen. Bei der Schaltung nach Fig. 1 liegt der Steller 9 in einer Verbindungsleitung zwischen der Gleichstromquelle und dem Wechselrichter 11, es sind aber auch Schaltungen mit einem parallel zur Gleichstromquelle angeordneten Steller möglich. Durch entsprechende, nicht dargestellte Regeleinrichtungen wird beim Normalbetrieb der Wechselrichter mit einem vorgebbaren eingeprägten Zwischenkreisgleichstrom gespeist. Durch das Fahr-Brems-Schütz 12 ist der Leistungsfluss zwischen Netz und Maschine umkehrbar. Im Fahrbetrieb ist das Schütz 12 geschlossen. Bei geöffnetem Steller wird Energie vom Netz zugeführt; bei Stellersperre fliesst der Strom über die Diode 13. Im Bremsbetrieb ist das Schütz 12 geöffnet; die Bremsenergie wird über die Dioden 13 und 14 ins Netz zurückgespeist oder nach Zündung des Bremsthyristors 15 vom Bremswiderstand 15' aufgenommen. Zusätzlich ist der Freilaufkreis über den Steller 9 und die Diode 14 für die Stromregelung erforderlich.

Der Wechselrichter 11 ist als Drehstrombrücke für Phasenfolgelöschung ausgelegt. Der auf den Wechselspannungsausgang R arbeitende Strang des Wechselrichters enthält in jedem Zweig ein steuerbares Ventil 12R bzw. 13R, das in Reihe mit einem ungesteuerten Ventil 14R bzw. 15R liegt. Diese Ventile sind vorzugsweise als Thyristoren bzw. Dioden ausgelegt und so geschaltet, dass der Wechselspannungsausgang R zwischen den beiden Dioden liegt. Auch die auf die Ausgänge S, T arbeitenden Stränge bestehen aus entsprechenden Thyristoren 12S und 13S bzw. 12T und 13T und entsprechenden Dioden 14S, 15S, 14T und 15T. An den Verbindungspunkten zwischen den Ventilen 12R und 14R bzw. 12S und 14S bzw. 12T und 14T sind Kondensatoren 16 angeschlossen, die im Stern oder, wie in Fig. 1 gezeigt, im Dreieck zueinander angeordnet sind. Entsprechende Kondensatoren 17 sind auch in der anderen Brückenhälfte vorgesehen. An die Wechselspannungsausgänge R, S, T ist eine Asynchronmaschine 20 angeschlossen.

Im Normalbetrieb wird die Vorrichtung durch eine in Fig. 1 nicht dargestellte Steuerung gesteuert, von der jedoch beim Übergang auf den erfindungsgemässen Notbetrieb auf die Notsteuereinrichtung 22 umgeschaltet werden kann, wie durch den Schalter 21 angedeutet ist. Dabei kann eine Verriegelung vorgesehen sein, die bei Normalbetrieb den Schalter 21 geöffnet hält und ein Schliessen des Schalters 21, z.B. über einen entsprechenden Zündschlüssel, nur ermöglicht, wenn die Fahrdrahtspannung auf den niedrigen Wert von z.B. 40 bis 60 V abgesunken und gleichzeitig die Normalsteuereinrichtung verriegelt ist.

Zu Beginn des Notbetriebes ist der Steller 9 nicht gezündet. Während dieses Verfahrensschrittes a werden die Kommutierungskondensatoren 16, 17 des Wechselrichters auf eine vorgegebene Spannung, z.B. etwa 200 bis 300 V, aufgeladen. Dies kann z.B. durch eine in Fig. 1 gezeigte Nachladeeinrichtung geschehen, bei der durch Schliessen der Schalter 25 die Pole 23, 24 einer Ladespannungsquelle über Vorladewiderstände 26, 27 an die beiden Elektroden der Ventile 12R, 12S und 12T und ebenso über Widerstände 28 und 29 jeweils an die beiden Elektroden der Ventile 13R, 13S und 13T mit einer der Stromführungsrichtung dieser Ventile entsprechenden Polarität gelegt werden. Wird nun das Ventil 12R gezündet, so wird die eine Belegung der an dieses Ventil angeschlossenen Kondensatoren 16 über 12R und 26 auf eine Spannung gelegt, die sich aus der Ladespannung entsprechend der Spannungsteilung durch die Widerstände 26 und 27 ergibt. Jeweils die andere Belegung dieser Kondensatoren liegt über die Widerstände 27 auf dem Potential der negativen Klemme 24 der Ladespannung. Eine entsprechende Vorladung findet auch im anderen

Brückenzweig durch Zündung des Ventiles 13S statt. Die Ladespannung kann z.B. von der Fahrzeugbatterie oder von den Polen 1 und 2 abgegriffen werden, wobei ein Spannungsumformer zwischengeschaltet sein kann. Die Dioden 30 bis 33 sind so geschaltet, dass nur der Vorladestrom über die Widerstände 26 bis 29 fliessen kann. Vorteilhaft wird als Umformer ein (nicht dargestellter) Hilfswechselrichter verwendet, der nur auf die geringe Belastung ausgelegt zu werden braucht, die sich aus der für die Vorladung vorgesehene Vorladespannung ergibt.

Während dieser Phase steht die Asynchronmaschine still, da wegen des gesperrten Stellers die Gleichspannungsquelle 1, 2 vom Wechselrichter getrennt ist. Dabei kann auch das Fahr-Brems-Schütz 12 geöffnet sein. Im nächsten Verfahrensschritt b wird jedoch das Schütz 12 geschlossen und das Ventil 10 des Gleichstromstellers 9 gezündet. Von jetzt ab bleiben bis zum Ende des Notbetriebes alle Löschimpulse für das Ventil 10 gesperrt und der Steller 9 stromführend.

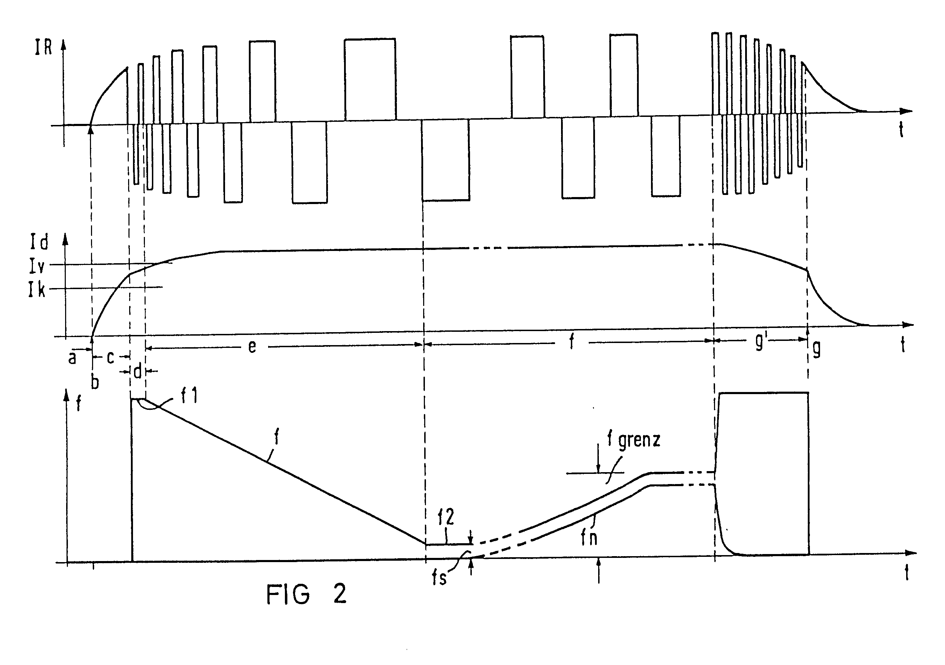

Im folgenden Verfahrensschritt c wird z.B. über die Ausgänge R und S des Wechselrichters 11 ein Strom durch die Asynchronmaschine geleitet. Dazu werden die Ventile 12R und 13S gezündet. Dieser Strom nimmt in dieser Phase zu, wie in Fig. 2 durch den Verlauf des Ausgangsstromes IR bzw. des Eingangsstromes Id dargestellt ist. Bei etwa 40 V Fahrdrahtspannung übersteigt der Strom IR bzw. Id den Minimalwert Ik, bei dem bei einer Kommutierung des Stromes z.B. vom Ventil 12R auf das Ventil 12T die Kommutierungskondensatoren bereits auf eine über der Vorladespannung liegende Spannung nachgeladen werden. Wird eine derartige Kommutierung (z.B. eine Zündung des Ventiles 12T) nicht vorgenommen, so steigt der Strom weit über 100 A an; das ist etwa der Maximalwert Iv, der bei der Vorladung von 200 bis 300 V noch kommutiert werden kann. Daher wird im Verfahrensschritt d die Wechselrichtersteuerung nach Überschreiten des Wertes Ik und vor Überschreiten des Wertes Iv freigegeben, wobei für die Wechselrichteransteuerung eine hohe Frequenz vorgegeben wird. Der Strom steigt nun weiter an, wobei jedoch die Anstiegsgeschwindigkeit durch die bei der Kommutierung entstehende Gegenspannung der Asynchronmaschine verringert ist. Die Taktfrequenz wird anfangs so hoch gewählt, dass innerhalb der Stromführungszeit des als nächstes angesteuerten Ventiles 12T der Strom den Maximalwert Iv nicht überschreitet. Da aber infolge Nachladung bei den Kommutierungen die Spannung an den Kommutierungskondensatoren über 1000 V ansteigt, ist im weiteren Ablauf ein Ansteigen des Stromes über den Maximalwert Iv unbedenklich und es kann nunmehr im Verfahrensschritt e die Taktfrequenz abgesenkt werden.

In Fig. 2 ist auch der Verlauf der Taktfrequenz f dargestellt. Die Betriebsphase d, während der der Wechselrichter mit der vorgegebenen hohen Frequenz f1 angesteuert wird, ist dabei sehr kurz gewählt, während im Verfahrensschritt e die Taktfrequenz f linear bis zu einem Wert f2, der nahezu Null sein kann, abgesenkt wird.

Wird nunmehr in der Betriebsphase f die Taktfrequenz wieder langsam erhöht, so kann jetzt der Läufer dem Umlauf des Ständerstromes folgen. In Fig. 2 ist die Läuferdrehzahl fn ebenfalls eingezeichnet; die Wechselrichterfrequenz läuft ihr mit der Schlupffrequenz fs vor. Für einen sanften Anlauf der Asynchronmaschine genügt es, den Endwert für die Absenkung der Taktfrequenz beim Verfahrensschritt e entsprechend der Schlupffrequenz beim Übergang von Stillstand in den Anlauf des Läufers zu wählen. Die Veränderung der Taktfrequenz wird im Verfahrensschritt f mit einer vorgegebenen Frequenzabweichung von der Läuferdrehzahl fn gesteuert. Um eine Selbstentregung der Maschine zu verhindern, ist die Taktfrequenz begrenzt (Grenzwert $f_{grenz}$).

Wenn das Fahrzeug die Waschstrasse verlässt und vom Fahrdraht wieder eine höhere Spannung geliefert wird, muss der Eingangsstrom des Wechselrichters wieder durch den Steller steuerbar sein. Der Gleichstromsteller 9 muss also zur Beendigung des Notbetriebes gelöscht werden. Dies geschieht durch den Verfahrensschritt g, bei dem das Schütz 12 geöffnet wird, so dass der Strom durch den Gleichstromsteller 9 verschwindet (das Ventil 10 erlischt) und der Strom durch die Asynchronmaschine abklingt.

Zur Vorbereitung der Öffnung des Schützes 12 ist es vorteilhaft, in einem Verfahrensschritt g' die Wechselrichtertaktfrequenz ohne Beschränkung auf den Grenzwert $f_{grenz}$ hochzufahren. Dies kann insbesondere sprungartig erfolgen. Die in Fig. 2 gezeigten Verläufe sind nicht massstäblich und dienen lediglich zur Veranschaulichung des Verfahrens. Bei der Durchführung des Verfahrens ist es nicht erforderlich, den Übergang zwischen den Verfahrensschritten c und d, e und f sowie g' und g in Abhängigkeit vom jeweiligen aktuellen Stromwert vorzunehmen. Vielmehr genügt es, die jeweiligen Dauern der einzelnen Betriebsphasen durch eine Zeitschaltung für die Steuereinrichtung 22 vorzugeben.

**Patentansprüche**

1. Verfahren zum Betrieb einer Asynchronmaschine (20) mit einem Wechselrichter (11) mit Phasenfolgelöschung, der bei Normalbetrieb mittels eines an eine Gleichstromquelle (1, 2) angeschlossenen Gleichstromstellers (10) mit einem steuerbaren Gleichstrom gespeist ist, dadurch gekennzeichnet, dass für den Fall, dass die Gleichspannung eine für die Löschung des Gleichstromstellerventils (10) nicht ausreichende Spannung liefert, nacheinander folgende Verfahrensschritte für einen Notbetrieb der Asynchronmaschine mit niedriger Drehzahl vorgenommen werden:

a) bei gesperrtem Gleichstromstellerventil (10) werden die Kommutierungskondensatoren (16, 17) des Wechselrichters auf eine vorgegebene Spannung aufgeladen,

b) das Gleichstromstellerventil wird gezündet

4

und alle Impulse zum Löschen des Gleichstromstellerventils werden bis zur Beendigung des Notbetriebes gesperrt,

c) durch Ansteuerung zweier Brückenzweige (12R, 13S) des Wechselrichters wird ein Gleichstrom durch die Asynchronmaschine geleitet,

d) der Wechselrichter (11) wird mit einer vorgegebenen hohen Taktfrequenz (f1) angesteuert, wenn der durch Wechselrichter und Asynchronmaschine geleitete Strom einen eine Nachladung der Kommutierungskondensatoren ermöglichenden Minimalwerk (Ik) überschritten und noch keinen durch die Vorladung der Kommutierungskondensatoren nicht mehr kommutierbaren Wert (Iv) erreicht hat.

e) die Taktfrequenz (f) wird bis zum Anlaufen der Asynchronmaschine abgesenkt,

f) die Taktfrequenz (f) wird entsprechend der angestrebten Drehzahl (fn) der Asynchronmaschine gesteigert,

g) zur Beendigung des Notbetriebes wird die Gleichstromquelle (1, 2) abgeschaltet.

2. Verfahren nach Anspruch 1, dadurch gekennzeichnet, dass die Drehzahl der Asynchronmaschine auf einen solchen Wert begrenzt wird, dass keine Selbstentregung der Asynchronmaschine auftritt.

3. Verfahren nach einem der beiden Ansprüche 1 oder 2, dadurch gekennzeichnet, dass die Dauer für die Verfahrensschritte c und/oder d und/oder e fest vorgegeben wird.

4. Verfahren nach einem der Ansprüche 1 bis 3, dadurch gekennzeichnet, dass die Verringerung der Taktfrequenz im Verfahrensschritt e kontinuierlich, insbesondere ungefähr linear vorgenommen wird.

5. Verfahren nach einem der Ansprüche 1 bis 4, dadurch gekennzeichnet, dass vor Abschalten der Gleichstromquelle die Taktfrequenz erhöht wird.

6. Verfahren nach einem der Ansprüche 1 bis 5, angewendet zum Antrieb von elektrischen Triebfahrzeugen in Wasch- oder Montagestrecken.

7. Verfahren nach Anspruch 6 für Triebfahrzeuge mit mehreren Asynchronmaschinen, dadurch gekennzeichnet, dass im Notbetrieb nur eine Asynchronmaschine betrieben wird.

## Claims

1. A process for the operation of an asynchronous machine (20) having an inverting rectifier (11) with phase sequence cancellation, which inverting rectifier is fed with a controllable direct current by means of a d.c. regulating unit (10) connected to a d.c. source (1, 2) during normal operation, characterized in that in the event that the d.c. supply provides a voltage insufficient to cut out the d.c. regulating unit valve (10) consecutive process steps are carried out for an emergency operation of the asynchronous machine with a low number of revolutions:

(*a*) when d.c. regulating unit valve (10) is blocked, the commutating capacitors (16, 17) of the inverting rectifier are charged so as to have a predetermined voltage;

(*b*) the d.c. regulating unit valve is triggered and all pulses for cutting out the d.c. regulating unit valve are blocked until the termination of the emergency operation;

(*c*) a direct current is fed through the asynchronous machine by the control of two bridge branches (12R, 13S) of the inverting rectifier;

(*d*) the inverting rectifier (11) is controlled by means of a predetermined high clock frequency (f1) when the current fed through the inverting rectifier and the asynchronous machine has exceeded a minimal value (Ik), which allows the commutator capacitors to be recharged, but has not yet reached a value (Iv) which can no longer be commutated as a result of the precharging of the commutator capacitors;

(*e*) the clock frequency (f) is reduced until the asynchronous machine starts;

(*f*) the clock frequency (f) is increased in accordance with the intended speed (fn) of the asynchronous machine;

(*g*) the direct current source (1, 2) is switched off in order to end the emergency operation.

2. A process as claimed in claim 1, characterized in that the speed of the asynchronous machine is limited to a value such that no self-starting of the asynchronous machine occurs.

3. A process as claimed in claim 1 or 2, characterized in that the duration for the process steps c and/or d and/or e is firmly specified.

4. A process as claimed in one of claims 1 to 3, characterized in that the reduction of the clock frequency in the process step e is effected so as to be continuous, and in particular to be approximately linear.

5. A process as claimed in one of claims 1 to 4, characterized in that the clock frequency is increased before the d.c. source is switched off.

6. A process as claimed in one of claims 1 to 5, used for the operation of electric drive vehicles in washing or assembling sections.

7. A process as claimed in claim 6 for drive vehicles with a plurality of asynchronous machines, characterized in that only one asynchronous machine is operated during emergency operation.

## Revendications

1. Procédé pour actionner une machine asynchrone (20) avec un onduleur (11) à suppression de séquence de phases, qui est alimenté en fonctionnement normal avec un courant continu contrôlable, à l'aide d'un convertisseur direct de courant continu (10) relié à une source de courant continu (1, 2), caractérisé par le fait que, pour le cas où la tension continue fournit une tension insuffisante pour l'extinction de la soupape électrique du convertisseur direct de courant continu (10), on réalise successivement les phases opératoires suivantes pour un service de secours de la machine asynchrone, à vitesse de rotation plus faible:

a) lorsque la soupape électrique du convertisseur direct de courant continu (10) est bloquée, les condensateurs de commutation (16, 17) de l'onduleur sont chargés à une tension prédéterminée;

b) la soupape du convertisseur direct de courant est activée et toutes les impulsions servant à l'extinction de la soupape du convertisseur direct de courant continu sont bloquées jusqu'à la fin du service de secours;

c) par l'attaque de deux branches de pont (12R, 13S) de l'onduleur, un courant continu est amené à passer par la machine asynchrone;

d) l'onduleur (11) est attaqué avec une fréquence de cadence élevée et prédéterminée (f1) si le courant qui passe par l'onduleur et la machine asynchrone a dépassé une valeur minimale (Ik) permettant une recharge des condensateurs de commutation et n'a pas encore atteint une valeur (Iv) qui n'est plus commutable par la charge préalable des condensateurs de commutation;

e) la fréquence de cadence (f) est abaissée jusqu'au démarrage de la machine asynchrone;

f) la fréquence de cadence (f) est augmentée en fonction de la vitesse de rotation recherchée (fn) de la machine asynchrone;

g) pour faire cesser le service de secours, la source de courant continu (1, 2) est débranchée.

2. Procédé selon la revendication 1, caractérisé par le fait que la vitesse de rotation de la machine asynchrone est limitée à une valeur telle qu'une autodésexcitation de la machine asynchrone n'intervient pas.

3. Procédé selon l'une des revendication 1 ou 2, caractérisé par le fait que la durée des phases opératoires c et/ou d et/ou e est prédéterminée de façon fixe.

4. Procédé selon l'une des revendication 1 à 3, caractérisé par le fait que la réduction de la fréquence de cadence dans la phase opératoire e est réalisée de façon continue, en particulier à peu près linéairement.

5. Procédé selon l'une des revendications 1 à 4, caractérisé par le fait que, avant de débrancher la source de courant continu, on augmente la fréquence de cadence.

6. Procédé selon l'une des revendications 1 à 5, appliqué à l'entraînement de véhicules électriques moteurs dans des pistes de lavage et des lignes de montage.

7. Procédé selon la revendication 6 pour des véhicules moteurs à plusieurs machines asynchrones, caractérisé par le fait qu'en service de secours une seule machine asynchrone est mise en route.

FIG 1

FIG 2